Europäisches Patentamt

European Patent Office

Office européen des brevets

(11) Publication number: **0 294 165**
**A2**

## (12) EUROPEAN PATENT APPLICATION

(21) Application number: **88304978.5**

(22) Date of filing: **01.06.88**

(51) Int. Cl.⁴: **B 65 D 81/26**
**B 65 D 81/20**

(30) Priority: **05.06.87 JP 140003/87**
**31.08.87 JP 131553/87**
**31.08.87 JP 131554/87**
**31.08.87 JP 131555/87**
**31.08.87 JP 215128/87**

(43) Date of publication of application:
**07.12.88 Bulletin 88/49**

(84) Designated Contracting States:
**DE ES FR GB IT NL**

(71) Applicant: **MITSUI TOATSU CHEMICALS INC.**
**No. 2-5, Kasumigaseki 3-chome**
**Chiyoda-Ku Tokyo 100 (JP)**

(72) Inventor: **Konishi, Yoshiyuki**
**I-303, 5,Takiharucho Minami-ku**
**Nagoya-shi Aichi-ken (JP)**

**Ryuno, Toshiro**
**I-403, 5,Takiharucho Minami-ku**
**Nagoya-shi Aichi-ken (JP)**

**Fujita, Mitsunobu**
**Irohaso 1-403, 3-8, Irohacho Minato-ku**
**Nagoya-shi Aichi-ken (JP)**

**Matsuda, Katsushige**
**8-25, Kitahamacho**
**Takamatsu-shi Kagawa-ken (JP)**

(74) Representative: **Griffin, Kenneth David et al**
**Saunders & Dolleymore 9, Rickmansworth Road**
**Watford Hertfordshire WD1 7HE (GB)**

(54) **Fresh fish package and method for processing fresh fish.**

(57) There is here disclosed a fresh fish package which is prepared by receiving fresh fish or slices thereof in a container made from a resin substantially having gas barrier properties, particularly preferably a high acrylonitrile content resin, together with a deoxidant and/or in an atmosphere of a nitrogen gas or a mixture of a nitrogen gas and carbon dioxide, and then sealing the container. In addition, a method is also provided in which processing is carried out to obtain fresh fish products suitable for the aforesaid fresh fish package which can be preserved and tranported as it is fresh.

F I G.1

EP 0 294 165 A2

## Description

## Fresh Fish Package and Method for Processing Fresh Fish

The present invention relates to a fresh fish package in which a fresh fish is put in a container made from a resin having excellent gas barrier properties, and a method for processing the fresh fish. More particularly, the present invention relates to a fresh fish package excellent in preservation properties and a method for processing the fresh fish which permits preserving or transporting the fresh fish as it is in a fresh state.

Fresh fish are widely eaten in the form of raw slices or through cookery such as broiling or boiling, and in any case, the fish having higher freshness are particularly favored. For example, the manner of cooking living fish and immediately eating the thus cooked fish is extremely desirable, depending upon a kind of fish. This manner is however difficult in usual homes, and it is also difficult to sell living fish. Hence, the fresh fish are generally sold in a refrigerated or frozen state. When there is employed a conventional packing way, for example, a way of wrapping, in a wrapper, fish on a tray made from polyethylene, polypropylene, foamed styrene or the like, and when the resulting package is kept in a refrigerated state in a showcase in a store, the fish are discolored and rotted in a short period of time and becomes uneatable. Furthermore, another way of keeping the fresh fish in a frozen state is also employed, but after thawing, there is the problem that the taste of the fish deteriorates.

Another kind of package is possibly contrived in which a multi-layer sheet of a gas barrier layer comprising a polyamide or ethylene-vinyl alcohol copolymer is used as a tray for receiving fresh fish and an deoxidant therein. However, if the deoxidant is in direct contact with the fish, the deoxidant becomes wet and does not exert a sufficient effect.

In recent years, as ways of transporting fresh fish without any deterioration of taste, packing techniques such as enclosure of a gas, introduction of a deoxidant and the like have been attempted, but in any case, the retention effect of freshness depends upon a processing manner prior to the packing.

In the case that the conventional multi-layer sheet which is the gas barrier layer comprising a polyamide or ethylene-vinyl alcohol copolymer is used as the tray, the gas barrier layer is liable to be broken by drips from the fresh fish. Moreover, when the deoxidant is in contact with the fresh fish, there is the drawback that the effect of the deoxidant cannot be kept sifficiently for a long period of time. In addition, even when the nitrogen gas is enclosed in the package, the mere replacement with the gas cannot achieve satisfactory deoxidization, and therefore the retention effect of the freshness is not enough.

The freshness retention of the fresh fish is affected by the freshness of the fresh fish themselves, processing technique, packing materials, conditions of transportation and the like, and when any of these factors is poor, the retention of the freshness cannot be expected. As ways of the conventional transport of the fresh fish, there are the transport of the living fish and the transport of the frozen fish, but in most cases, the fresh fish are transported in a processed and frozen form. This reason is that the fresh fish tend to particularly get rotten, and in the case that the fish are packed in a usual way and are preserved in a refrigerator, a preservative period is only about 1 or 2 days. Moreover, when the package is preserved in a freezer, the progress of rotting can be inhibited, but after thawing, the taste of the fish spoils and drips are apt to ooze therefrom.

On the contrary, the transport of the living fish requires facilities and heightens costs.

Nowadays, consumers who have not experienced processing treatments of the fish such as cut of head portions and removal of internals are increased, and it is getting more difficult to dispose of the needless rest of the fish produced in cooking. Therefore, the fresh fish which the cosumers demand are those which do not require much time and labor for cooking and which are fresh. In order to satisfy these requirements, it is necessary to rapidly give various processing treatments to the fresh fish prior to packing them. However, many processing treatments take a lot of time and labor, which tends to lead to the loss of freshness.

Under such situations as mentioned above, the processing technique is desired by which the fresh fish can be transported, maintaining freshness, without freezing the fish after the processing. However, a conventional processing treatment of the fresh fish, for example, mere processing operations of slicing the fish, then washing them, and wiping the surfaces thereof are poor in the retention effect of the freshness, and hence such a conventional technique cannot meet the above needs.

An object of the present invention is to provide a fresh fish package which can retain freshness for a long period of time.

Another object of the present invention is to provide a container for a fresh fish package suitable for the packing of fresh fish which can keep freshness for a long time.

Still another object of the present invention is to provide a method for processing fresh fish which permits transporting the fresh fish, retaining freshness, without freezing them after the processing.

The above-mentioned objects of the present invention can be accomplished by the following inventions:

A fresh fish package prepared by receiving fresh fish or slices thereof in a container made from a resin substantially having gas barrier properties together with a deoxidant and/or in an atmosphere of a nitrogen gas or a mixture of the nitrogen gas and carbon dioxide, and then sealing the container.

A container for fresh fish which comprises a receiving body and a sealing lid, the receiving body being composed of a portion where the fresh fish or slices thereof are received and another portion where a deoxidant is received, the aforesaid receiving body being constituted so that the fresh fish or slices thereof

2

and the deoxidant may not be brought directly into contact with each other and may not be perfectly separated from each other, the receiving body being made from a resin substantially having gas barrier properties, the aforesaid sealing lid being also made from the resin substantially having gas barrier properties.

A method for processing fresh fish into a form suitable for cooking which comprises the steps of maintaining the fresh fish at a temperature of -5 to 5°C in advance, adjusting an atmospheric temperature in processing to 20°C or less, rapidly packing the fish or slices after the completion of the processing, and maintaining the processed fresh fish package at a temperature of -5 to 10°C.

In the accompanying drawings,

Figs. 1 and 2 are sectional views partially cut out and illustrating embodiments of fresh fish packages according to the present invention;

Figs. 3 and 4 are sectional views illustrating other 15' embodiments of the fresh fish packages according to the present invention; and

Figs. 5 and 6 are sectional views illustrating still other embodiments of the fresh fish packages according to the present invention.

Examples of resins having excellent gas barrier properties used in the present invention include high acrylonitrile content resins, polyvinyl alcohol resin and polyvinylidene chloride resin. In the present invention, containers having various shapes can be obtained by vacuum forming or air-pressure forming a single layer sheet or a multi-layer sheet which is prepared by a usual extrusion process. Furthermore, in the present invention, as a top film which is a lid for the container, there can be used a single-layer film made from the above-mentioned resin or a multi-layer film prepared by superposing the film of the above-mentioned resin upon a film of polypropylene, polyethylene, polyester, nylon or the like. This lid may be used to seal the container body by means of a usual heat sealing or impulse sealing process.

Of the above-mentioned resins which are excellent in gas barrier properties, the high acrylonitrile content resins are particularly preferable.

The high acrylonitrile content resin is a copolymer mainly comprising an unsaturated nitrile monomer such as acrylonitrile or methacrylonitrile, and it contains 50% by weight or more, preferably 55% by weight or more, of the unsaturated nitrile monomer content.

Examples of monomers which can copolymerize with the unsaturated nitrile monomer include styrene, butadiene, isoprene, methyl acrylate, ethyl acrylate, methyl methacrylate and ethyl methacrylate, and they are used alone or in a combination of two or more thereof.

Examples of the high acrylonitrile content resins which can be used in the present invention include butadiene-acrylonitrile copolymer, isoprene-acrylonitrile copolymer, butadiene-styrene copolymer, mixtures of these copolymers and rubber polymers such as polybutadiene and polyisoprene, and polymers which have been prepared by graft polymerizing the unsaturated nitrile monomers with the above-mentioned copolymerizable monomers in the presence of the above rubber polymer. Particularly preferable is the high acrylonitrile content resin which contains 50% by weight or more of the acrylonitrile monomer and which has been prepared by polymerizing a mixture of a great amount of the acrylonitrile monomer and the monomer copolymerizable with this acrylonitrile monomer in the presence of a conjugated diene synthetic rubber, because such a high acrylonitrile resin has workability and impact resistance in good balance.

The container used in the present invention may be prepared by vacuum forming or air-pressure forming a sheet obtained from the above-mentioned resin by a usual extrusion process, calender process, inflation process or the like. When the high acrylonitrile content resin is used, deep drawing can be easily performed, and the containers having various shapes such as circle, triangle and rectangle can be obtained.

The thickness of the container used in the present invention depends upon internal volume, required strength and the like but is preferably 100 to 800 μm. When the thickness is less than 100 μm, the stiffness of the container is poor, and when it is in excess of 800 μm, workability becomes poor or cost rises merely.

In the present invention, a bag may be used in place of the above-mentioned container. The bag may be prepared, by a usual sealing process, from a single layer film formed by subjecting the high acrylonitrile content resin to a usual extrusion process, calender process, inflation process or the like, or from a laminated film of the above single layer film and a film of polypropylene, polyethylene, polyester, nylon or the like. After fresh fish have been placed in the bag, sealing is carried out by a usual heat sealing or impulse sealing process. The thickness of the film for the bag depends upon internal volume, required strength and the like but is preferably 20 to 100 μm. When the thickness is less than 20 μm, the film is unpreferably liable to break, and when it is in excess of 100 μm, workability is bad and cost rises merely.

The high acrylonitrile resin which is used as the material for the bag is the hereinbefore mentioned high acrylonitrile resin. The bag made from the high acrylonitrile resin is stable to drips from fresh fish and therefore can sufficiently retain the fressness of the fish for a long period of time.

In the present invention, any known and immediately effective deoxidant can be used, and the deoxidant which can exert the deoxidation effect within 12 hours is preferred.

The fresh fish package of the present invention preferably contains a drip absorbent for absorbing drips from the fish. As the drip absorbent, there can be used a cellulose product such as paper and cloth.

In the fresh fish package of the present invention, the deoxidant is preferably received in the container so as not to be brought directly into contact with the fresh fish or slices thereof, because in such a way, the rate of the deoxidation can be accelerated.

A nitrogen gas or a mixture of a nitrogen gas and carbon dioxide may be used in the container together with or in place of the deoxidant. In this case, the concentration of carbon dioxide is preferably 20% or less. When the content of carbon dioxide is in excess of 20%, the taste of the fresh fish becomes slightly astringent at times.

The fresh fish package of the present invention may be prepared by first placing fresh fish or slices thereof in a container made from a resin substantially having gas barrier properties, then putting a deoxidant therein and/or replacing air in the container with a nitrogen gas or a mixture of the nitjrogen gas and carbon dioxide, and sealing the container with a top film.

The sealing of the container with the top film may be achieved by using the film, which is a lid for the container, having gas barrier properties, on the container receiving the fresh fish and the deoxidant. A preferable example of the film having the gas barrier properties is a single layer film of the high acrylonitrile content resin having high gas barrier properties or a multi-layer film prepared by laminating this single layer film to a film of polypropylene, polyethylene, polyester, nylon or the like. In addition, a multi-layer film may be used in which a polyamide or ethylene-vinyl alcohol copolymer is used as the gas barrier layer.

In order to seal the container with the gas barrier film, a usual heat sealing or impulse sealing process is utilized. If necessary, the top film may be put into print to heighten a commercial value of the package.

Next, the sealed packages are placed in a chamber capable of maintaining a low temperature such as a refrigerator or a foamed polystyrene insulating box, and they are then preserved or transported. At this time, a temperature in the container is preferably maintained at a low temperature, for example, -5 to $+10°C$.

Also in the case of using the bag, the fresh fish package can be obtained in a similar manner. That is, fresh fish or slices thereof are received in the high acrylonitrile content resin bag, and the deoxidant is put therein and/or air in the container is replaced with a nitrogen gas or a mixed gas of the nitrogen gas and carbon dioxide, and the mouth of the bag is then sealed.

According to the present invention, in the case of easily deformable foods such as the slices, or in the case that small fish are received in quantities in one bag, they may be previously received in the container made from foamed styrene, polypropylene, polyethylene or the like, and the container may be then put in the bag together with the deoxidant, followed by sealing. If necessary, the bag may be put into print to heighten a commercial value of the package.

Now, embodiments of the fresh fish package and packing container of the present invention will be described in reference to accopanying drawings.

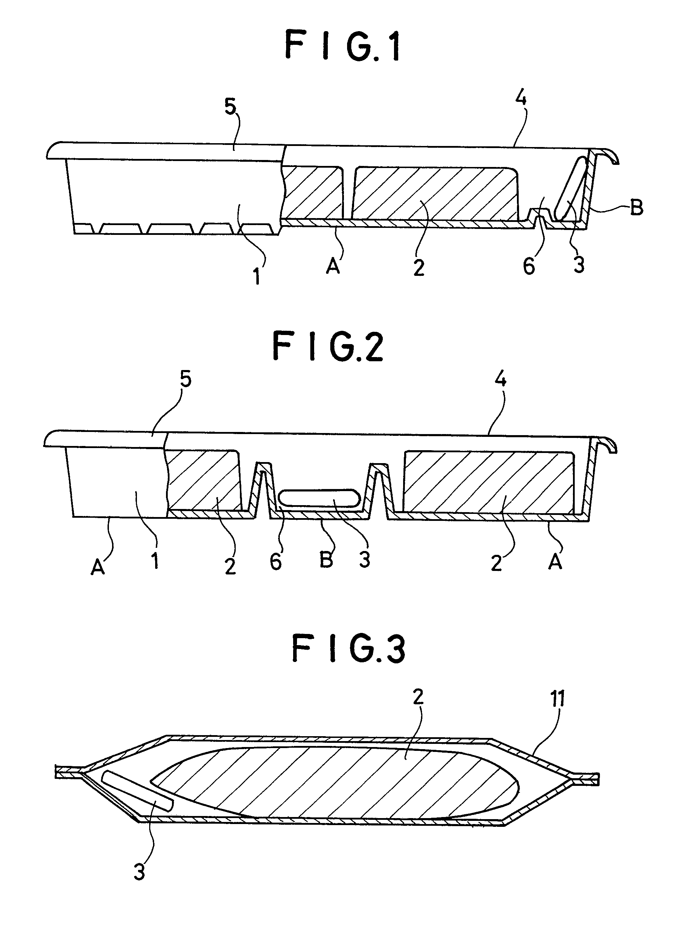

Figs. 1 and 2 show fundamental embodiments of the present invention. In Fig. 1, a container 1 is divided into a fresh fish receiving portion A and a deoxidant receiving portion B by a rib 6, so that the fresh fish are not brought directly into contact with a deoxidant 3. Fresh fish or slices 2 thereof are received in the fresh fish receiving portion A of the container 1, and the deoxidant 3 is received in the deoxidant receiving portion B. The container is provided on the top thereof with a flange 5, and it is hermetically sealed on this flange 5 with a top film 4. Another embodiment shown in Fig. 2 is similar to that of Fig. 1 with the exception that the deoxidant receiving portion B lies in the middle of the container.

In the case that a nitrogen gas or a mixed gas of the nitrogen gas and carbon dioxide is used together with or in place of the deoxidant, air in the container is replaced with the gas, and the top film 4 is then attached thereto.

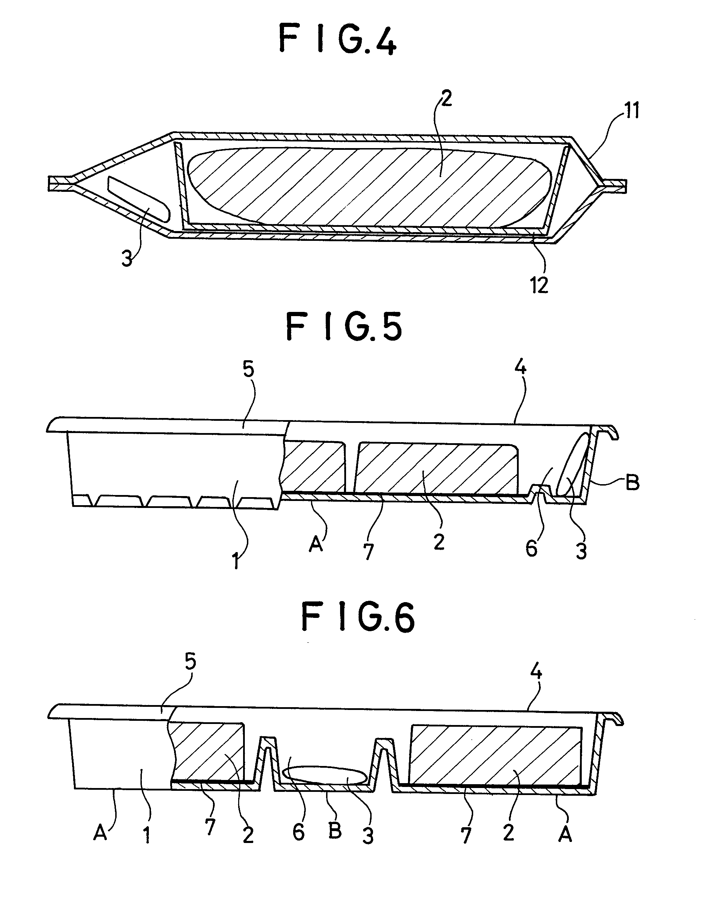

Figs. 3 and 4 show embodiments in which the container is a bag. In Fig. 3, the fresh fish 2 is received together with the deoxidant 3 in the bag 11 made from a high acrylonitrile resin film. Moreover, in Fig. 4, the fresh fish 2 are put in a tray 12 in order to avoid the contact of the fresh fish with the deoxidant, and the tray 12 is received together with the deoxidant 3 in the bag 11. After they have been received therein, the mouth of the bag is sealed.

Together with or in place of the deoxidant, a nitrogen gas or a mixed gas of the nitrogen gas and carbon dioxide is introduced into the bag.

Figs. 5 and 6 show embodiments in which the fresh fish or slices thereof are received together with a drip absorbent in the container. In the embodiment in Fig. 5 which is fundamentally the same as in Fig. 1, a drip absorbent 7 is put on the bottom of the fresh fish receiving portion A, and the fresh fish or slices thereof are further put on the drip absorbent 7. The embodiment in Fig. 6 is the same as in Fig. 5 with the exception that the deoxidant receiving portion B is positioned in the middle of the container.

In the present invention, the processing treatment of fresh fish is carried out as follows: First, fish which are in a fresh state are preserved in a cold saline solution or in a refrigerator at -5 to 5°C for usually 30 minutes or more, preferably 1 hour or more. In the case of the saline solution, the concentration of the salt is preferably in the range of about 1 to about 4%.

Next, processing treatments such as cut of heads, removal of internals, slicing, removal of backbones, removal of skins and washing with cold water are carried out, if necessary. It is preferred that these treatments are rapidly done in an atmosphere of 20°C or less. If the fresh fish are laid in an atmosphere of a high temperature for a long time, the freshness of the fish decreases quickly. It is necessary that the place where the processing treatments are performed, for example, a kitchen table, is maintained at the above-mentioned low temperature, but the whole builing containing the processing place need not be kept at the low temperature. Futhermore, this atmospheric temperature preferably is as low as possible but is such that the fresh fish are not frozen during the processing treatments, and in this case, working conditions for works must also be taken into consideration. Therefore, in view of these factors, the atmospheric temperature can be decided suitably.

Next, the fresh fish or slices thereof are usually subjected to a drip drain treatment in order to prevent the appearance of the packed fresh fish from deteriorating during storage or transport. This drip drain treatment can be achieved by using a usual dewatering sheet or water absorbing sheet, or by cold air drying.

Immediately after the above-mentioned processing treatments, the fresh fish are wrapped in a wrapping material. For the purpose of retaining the freshness of the fish, the wrapping is preferably carried out by utilizing the gas introduction system, the deoxidant disposition system or the combination thereof, and the wrapping material preferably is a sheet of a resin substantially having gas barrier properties which comprises, for example, a high acrylonitrile content resin, polyvinylidene chloride resin or polyvinyl alcohol resin.

The wrapped fresh fish or slices thereof are held in an atmosphere of -5 to 10°C. When transported, this package is stored in the atmosphere of not more than -5 to 10°C for 30 minutes or more, preferably 1 hour or more, and the transport is then made at -5 to 10°C, if possible. If the time necessary for the transport is within several hours, and if the above-mentioned conditions are met, that is, if the fish are held in the atmosphere of -5 to 10°C for 30 minutes or more, the freshness of the fish can be retained, even though the transport is made in the atmosphere of about 20°C.

Now, the present invention will be described in detail as examples.

Example 1

A high acrylonitrile content resin sheet (made by Mitsui Toatsu Chemicals, Inc.; Balex) having a thickness of 500 μm was vacuum molded to prepare a container of 3.5 cm in depth and 650 ml in internal volume. Fresh slices of young yellowtail, tuna, sea bream and cuttlefish were put in this container, and a deoxidant (made by Mitsubishi Gas Chemical Company, Ltd.; trade name "Ageless") was placed therein so as not to contact directly with these slices. Afterward, the container was thermally sealed with a separately prepared high acrylonitrile resin top film (thickness = 30 μm), and the resulting package was then preserved at 5°C to inspect a state of the slices with time. The results are set forth in Table 1.

Example 2

The same procedure as in Example 1 was repeated with the exception that the space in the container was replaced with a nitrogen gas instead of using the deoxidant. The results are set forth in Table 1.

Example 3

The same procedure as in Example 1 was repeated with the exception that the interior in the container was replaced with a mixed gas of 85% of a nitrogen gas and 15% of a carbon dioxide gas instead of using the deoxidant. The results are set forth in Table 1.

Comparative Example 1

The same procedure as in Example 1 was repeated with the exception that a container made from polyethylene resin was used and that a commercially available wrapping film was used as the top film. The results are set forth in Table 1.

Comparative Example 2

The same procedure as in Example 1 was repeated with the exception that oxygen was introduced into the container so that its concentration might be 20%. The results are set forth in Table 1.

## Table 1

|                | 1st Day | 2nd Day | 3rd Day | 4th Day |
|----------------|---------|---------|---------|---------|
| Example 1      | O       | O       | O       | O       |
| Example 2      | O       | O       | O       | O       |
| Example 3      | O       | O       | O       | O       |
| Comp. Example 1| Δ       | X       | X       | X       |
| Comp. Example 2| Δ       | X       | X       | X       |

O: Neither taste nor color changed.
Δ: Taste and color fairly deteriorated.
X: In a raw state, it was uneatable.

As is apparent from the above-mentioned results, the fresh fish slice package of the present invention has extremely good preservation properties.

Example 4

In the presence of 10 parts by weight of butadiene-acrylonitrile rubber copolymer (content of butadiene = 70% by weight), a mixture of 75 parts by weight of acrylonitrile and 25 parts by weight of methyl methacrylate was subjected to emulsion polymerization in order to prepare a high nitrile resin (acrylonitrile content = about 70% by weight based on an analytical value of nitrogen), and by the use of the thus prepared high nitrile resin, a sheet having a thickness of 300 μm was formed by an extrusion process. The sheet was vacuum molded to obtain such a tray of 5 cm in depth as shown in Fig. 1. This tray was packed with slices of young yellowtail in an amount of 200 g, and an iron-containing deoxidant (made by Mitsubishi Gas Chemical Company, Inc.; trade name "Ageless") was put therein. Afterward, the tray was thermally sealed with a separately prepared high acrylonitrile content resin film having a thickness of 40 μm, and the resulting package was preserved at 5°C to inspect a preservation state.

The results are set forth in Table 2.

Example 5

The same procedure as in Example 4 was repeated with the exception that in the presence of 10 parts by weight of butadiene-acrylonitrile rubber copolymer (content of butadiene = 80% by weight), a mixture of 70 parts by weight of acrylonitrile, 15 parts by weight of methyl methacrylate and 5 parts by weight of styrene was polymerized in order to prepare a high acrylonitrile content resin (acrylonitrile content = about 65% by weight based on an analytical value of nitrogen).

The results are set forth in Table 2.

Comparative Example 3

The same procedure as in Example 4 was repeated with the exception that a usual foamed polystyrene and wrapping film were used.

The results are set forth in Table 2.

## Table 2

|  | 1st Day | 2nd Day | 3rd Day | 4th Day | 5th Day |
|---|---|---|---|---|---|
| Example 4 | O | O | O | O | O |
| Example 5 | O | O | O | O | O |
| Comp. Example 3 | O | Δ | X | X | X |

Notes:
O:  Neither taste nor color changed.
Δ:  Taste and color fairly deteriorated.
X:  In a raw state, it was uneatable.

As is apparent from the above-mentioned results, the fresh fish package of the present invention has extremely good preservation properties.

Example 6

In the presence of 10 parts by weight of butadiene-acrylonitrile rubber copolymer (content of butadiene = 70% by weight), a mixture of 75 parts by weight of acrylonitrile and 25 parts by weight of methyl methacrylate was subjected to emulsion polymerization in order to prepare a high acrylonitrile content resin (acrylonitrile content = about 70% by weight based on an analytical value of nitrogen), and by the use of the thus prepared high acrylonitrile content resin, a film having a thickness of 40 μm was formed by an extrusion process. A bag having a size of 30 cm x 20 cm was obtained from the thus formed film. This bag was packed with slices of young yellowtail in an amount of 100 g, and an iron-containing deoxidant (made by Mitsubishi Gas Chemical Company, Inc.; trade name "Ageless") was put therein. Afterward, the bag was thermally sealed, and the bag was preserved at 5°C to inspect a preservation state.

The results are set forth in Table 3.

6

### Example 7

The same procedure as in Example 6 was repeated with the exception that slices of young yellowtail were placed in a foamed polystyrene tray.

The results are set forth in Table 3.

### Comparative Example 4

The same procedure as in Example 6 was repeated with the exception that a usual foamed polystyrene tray and wrapping film were used.

The results are set forth in Table 3.

### Table 3

|  | 1st Day | 2nd Day | 3rd Day | 4th Day | 5th Day |
|---|---|---|---|---|---|
| Example 6 | O | O | O | O | O |
| Example 7 | O | O | O | O | O |
| Comp. Example 4 | O | Δ | X | X | X |

Notes:
O: Neither taste nor color changed.
Δ: Taste and color fairly deteriorated.
X: In a raw state, it was uneatable.

As is apparent from the above-mentioned results, the fresh fish package of the present invention has extremely good preservation properties.

### Example 8

In the presence of 10 parts by weight of butadiene-acrylonitrile rubber copolymer (content of butadiene = 70% by weight), a mixture of 75 parts by weight of acrylonitrile and 25 parts by weight of methyl methacrylate was subjected to emulsion polymerization in order to prepare a high acrylonitrile content resin (acrylonitrile content = about 70% by weight based on an analytical value of nitrogen), and by the use of the thus prepared high nitrile resin, a sheet having a thickness of 300 μm was formed by an extrusion process. The formed sheet was vacuum molded to obtain such a tray having a thickness of 5 cm as in Fig. 5. This tray was packed with slices of young yellowtail in an amount of 200 g, and an iron-containing deoxidant (made by Mitsubishi Gas Chemical Company, Inc.; trade name "Ageless") was put therein. Afterward, the space in the tray was replaced with a nitrogen gas, and the tray was thermally sealed with a separately prepared high nitrile resin film of 40 μm in thickness. The package was preserved at 5°C to inspect a preservation state. The results are set forth in Table 4.

### Example 9

The same procedure as in Example 8 was repeated with the exception that the space in the tray was replaced with a mixed gas of 80% of a nitrogen gas and 20% of a carbon dioxide gas instead of using the nitrogen gas. The results are set forth in Table 4.

### Reference Example 1

The same procedure as in Example 8 was repeated with the exception that clean air was substituted for the nitrogen gas. The results are set forth in Table 4.

### Comparative Example 5

The same procedure as in Example 8 was repeated with the exception that a usual foamed polystyrene tray and wrapping film were used. The results are set forth in Table 4.

## Table 4

| | 1st Day | 2nd Day | 3rd Day | 4th Day | 5th Day |
|---|---|---|---|---|---|
| Example 8 | O | O | O | O | O |
| Example 9 | O | O | O | O | O |
| Ref. Example 1 | O | O | O | O | Δ |
| Comp. Example 5 | O | Δ | X | X | X |

Notes:
O: Neither taste nor color changed.
Δ: Taste and color fairly deteriorated.
X: In a raw state, it was uneatable.

As is apparent from the above-mentioned results, the fresh fish package of the present invention has extremely good preservation properties.

Example 10
A fresh young yellowtail was landed and preserved in a saline solution (salt concentration = about 3%) at 0°C for 1 hour, and afterward the fish was sliced to remove a backbone therefrom in an atmosphere of 15°C. A part of the slice was washed with water, and drip drain was carried out by the use of a water absorbing sheet. This slice was then placed together with a deoxidant (made by Mitsubishi Gas Chemical Company, Inc.; trade name "Ageless") in a bag prepared by thermally sealing a high acrylonitrile content resin film (made by Mitsui Toatsu Chemicals, Inc.; trade name "Zeclon") having a thickness of 40 μm. Afterward, the bag was stored at 5°C to inspect a discoloration and a rotten state of the young yellowtail with day. The results are set forth in Table 5.

Example 11
The same procedure as in Example 10 was repeated with the exception that a fresh young yellowtail was landed and preserved in a refrigerator at about 5°C for 1 hour, and the resulting package of the young yellowtail slice was then preserved at 5°C for 1 hour and was allowed to stand at 20°C for 4 hours. Afterward, the package was stored at 10°C to inspect a discoloration and a rotten state of the young yellowtail with day. The results are set froth in Table 5.

Comparative Example 6
The same procedure as in Example 10 was repeated with the exception that after landed, a fresh young yellowtail was preserved at 15°C for 1 hour. The results are set forth in Table 5.

Comparative Example 7
The same procedure as in Comparative Example 6 was repeated with the exception that after landed, a fresh young yellowtail was preserved in an atmosphere of -10°C for 1 hour. The results are set forth in Table 5.

Comparative Example 8
The same procedure as in Example 10 was repeated with the exception that the fish was sliced in an atmosphere of 25°C. The results are set forth in Table 5.

Comparative Example 9
The same procedure as in Example 10 was repeated with the exception that the bag was stored at 15°C. The results are set forth in Table 5.

Comparative Example 10
The same procedure as in Example 10 was repeated with the exception that the bag was stored at -10°C. The results are set forth in Table 5.

0 294 165

## Table 5

|  | 1st Day | 2nd Day | 3rd Day | 4th Day | 5th Day |
|---|---|---|---|---|---|
| Example 10 | O | O | O | O | O |
| Example 11 | O | O | O | O | O |
| Comp. Example 6 | O | O | Δ | X | X |
| Comp. Example 7 | O | Δ | Δ | X | X |
| Comp. Example 8 | O | Δ | Δ | X | X |
| Comp. Example 9 | O | X | X | X | X |
| Comp. Example 10 | O | Δ | Δ | X | X |

Notes:
O: Neither taste nor color changed.
Δ: Taste and color fairly deteriorated.
X: In a raw state, it was uneatable.

As is apparent from the above-mentioned results, the method for processing the fresh fish of the present invention provides the fish package with extremely good preservation properties.

Since the fresh fish package according to the present invention can retain the freshness thereof for a long period of time, the present invention can contribute greatly to the transport and sale of the fresh fish. In addition, the method of the present invention for processing the fresh fish permits transporting the fish, as they are fresh, without freezing them after the processing.

## Claims

1. A fresh fish package which is prepared by receiving fresh fish or slices thereof in a container made from a resin substantially having gas barrier properties together with a deoxidant and/or in an atmosphere of a nitrogen gas or a mixture of a nitrogen gas and carbon dioxide, and sealing said container.

2. A fresh fish package according to Claim 1 wherein said resin substantially having gas barrier properties is a high acrylonitrile content resin, polyvinyl alcohol resin or polyvinylidene chloride resin.

3. A fresh fish package according to Claim 1 wherein said container is made from said high acrylonitrile content resin.

4. A fresh fish package according to Claim 1 further containing a drip absorbing material for absorbing drips from said fresh fish.

5. A fresh fish package according to Claim 3 wherein said container is a bag.

6. A fresh fish package according to Claim 1 wherein said container is composed of a portion where said fresh fish or slices thereof are received and another portion where a deoxidant is received, and these portions are constituted so that said fresh fish or slices thereof and said deoxidant may not be brought directly into contact with each other and may not be perfectly separated from each other.

7. A fresh fish package according to Claim 3 wherein said high acrylonitrile content resin contains 50% by weight of an acrylonitrile monomer and is prepared by polymerizing, in the presence of a conjugated diene synthetic rubber, a mixture of a large amount of said acrylonitrile monomer and a monomer copolymerizable with said acrylonitrile monomer.

8. A container for a fresh fish package which comprises a receiving body and a sealing lid, said receiving body being composed of a portion where said fresh fish or slices thereof are received and another portion where a deoxidant is received, these portions being constituted so that said fresh fish or slices and said deoxidant may not be brought directly into contact with each other and may not be

9

perfectly separated from each other, said receiving body being made from a resin substantially having gas barrier properties, said sealing lid being also made from said resin substantially having gas barrier properties.

9. A container according to Claim 8 wherein said resin substantially having gas barrier properties is a high acrylonitrile resin.

10. A container for a fresh fish package which comprises a tray for receiving said fresh fish or slices thereof and a bag for enclosing said tray, said bag being made of a resin film substantially having gas barrier properties.

11. A container according to Claim 10 wherein said bag is made of a film of a high acrylonitrile content resin.

12. A method for processing fresh fish into a form suitable for cooking which comprises the steps of maintaining said fresh fish at a temperature of -5 to 5°C in advance, adjusting an atmospheric temperature during processing to 20°C or less, wrapping said fresh fish rapidly after the completion of said processing, and maintaining the resulting fresh fish package at a temperature of -5 to 10°C.

13. A method according to Claim 12 wherein said fresh fish are received in a container made from a resin substantially having gas barrier properties.

14. A method according to Claim 13 wherein said resin substantially having gas barrier properties is a high acrylonitrile resin.

15. A method according to Claim 12 wherein said fresh fish are maintained at a temperature of -5 to 5°C for 30 minutes or more.

16. A method according to Claim 12 wherein said processed fresh fish package is maintained at a temperature of -5 to 10°C for 30 minutes or more.

# FIG.1

5  4

B

1  A  2  6  3

# FIG.2

5  4

A  1  2  6  B  3  2  A

# FIG.3

2  11

3

0294165

# F I G.4

# F I G.5

# F I G.6